# EUROPEAN PATENT APPLICATION

(11) **EP 2 482 252 A1**
(43) Date of publication of application: **01.08.2012**
(21) Application number: 12152304.7
(22) Date of filing: 24.01.2012
(51) Int. Cl.: G07C 5/00, G07C 5/08, G06Q 30/02

(54) **Tire management system and method**

(30) Priority: 26.01.2011 US 201161436410 P
(71) Applicant: The Goodyear Tire & Rubber Company, Akron, OH 44316-0001 (US)
(72) Inventor: McIntosh, Johnny Lee, Lavaca, AR Arkansas 72941 (US); Barthol, Debbie Gay, Fort Smith, AR Arkansas 72908 (US); Atchley, Jacob Matthew, Van Buren, AR Arkansas 72956 (US)
(74) Representative: Kutsch, Bernd

(57) **Abstract**

A web-based tire management system tracks both tire-related and vehicle-related information for multiple fleets and for multiple models and brands of tires to enable sophisticated analysis of tire-related issues to be performed on behalf of individual fleets, as well as for tire dealers and manufacturers.

## Description

### Field of the Invention

The invention is generally related to tire management, and more specifically to management of the condition and performance of tires for vehicle fleets.

### Background of the Invention

Tires have been found to be one of the largest contributors to the operating costs for commercial vehicles. Tires eventually need to be replaced or retreaded whenever they become worn, typically when they become worn beyond an allowable minimum tread depth. In addition, the inflation pressure of tires (typically measured in pounds per square inch (PSI)) can have a significant impact on tire wear, vehicle safety, and fuel efficiency. It has also been found that different maintenance protocols can also affect the long term performance of tires, potentially lengthening the mileage of individual tires and thereby reducing repurchase and/or retread costs.

Tracking the current condition and long term performance of tires across a fleet of commercial vehicles, however, can be an expensive and time consuming task, and as a result, efforts have been made to develop software-based tire management tools to track tire-related data. Traditionally, such tools have been installed on individual computers, e.g., at tire dealers or at fleet locations, with data entry being manual in nature, typically through a fleet or dealer employee performing a manual inspection of the tires on individual vehicles, recording tire parameters such as tread depth and tire pressure on a paper form, and inputting the parameters into the computer after the inspection is complete. Basic reports can then be run on the collected data to identify potential issues for a fleet, or otherwise identify tires requiring maintenance in a fleet.

Particularly in larger fleets having multiple geographically-dispersed locations, it is difficult to track and accumulate tire parameters for multiple geographically-dispersed vehicles, or to analyze data that may be relevant to the fleet as a whole. Furthermore, reports are typically limited to individual fleets, and do not address, for example, how a fleet is performing compared to other fleets or to industries as a whole, or how certain tires perform compared to other brands and models of tires or in various applications.

Therefore, a need has arisen in the art for a more comprehensive and flexible tire management system.

### Summary of the Invention

The invention relates to a method in accordance with claim 1 and to a computer program product in accordance with claim 13.

Dependent claims refer to preferred embodiments of the invention.

The invention addresses the above and other drawbacks associated with the prior art by providing a web-based tire management system that tracks both tire-related and vehicle-related information for multiple fleets and for multiple models and brands of tires. Doing so enables sophisticated analysis of tire-related issues to be performed on behalf of individual fleets, as well as for tire dealers and manufacturers.

Therefore, consistent with one aspect of the invention tire-related data for a plurality of fleets of vehicles may be tracked by receiving via a web-based interface survey data collected from a plurality of vehicles associated with a plurality of fleets, the survey data including, for each of the plurality of vehicles, a plurality of tire parameters and a plurality of vehicle parameters; storing the survey data in a database; and, in response to a request received through the web-based interface, generating at least one report using the survey data stored in the database, wherein the report is based upon survey data collected from vehicles associated with more than one fleet.

These and other advantages and features, which characterize the invention, are set forth in the claims annexed hereto and forming a further part hereof. However, for a better understanding of the invention, and of the advantages and objectives attained through its use, reference should be made to the Drawings, and to the accompanying descriptive matter, in which there is described exemplary embodiments of the invention.

### Brief Description of the Drawings

FIGURE 1 is a block diagram of an exemplary implementation of a tire management system consistent with the invention.
FIGURE 2 is a block diagram of an exemplary implementation of the tire database referenced in Fig. 1.

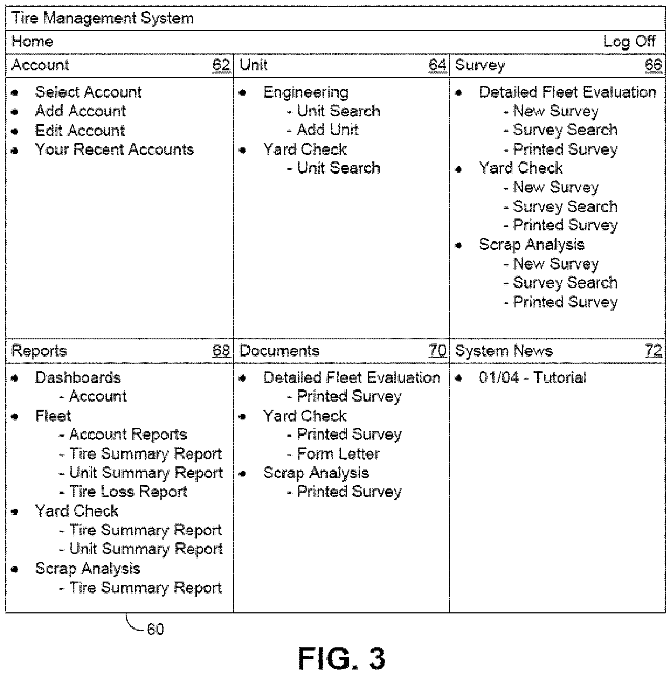

FIGURE 3 is a screen shot of an exemplary home page displayed by the tire management system referenced in Fig. 1.
FIGURE 4 is a screen shot of an exemplary account lookup page displayed by the tire management system referenced in Fig. 1.
FIGURE 5 is a screen shot of an exemplary add/edit account page displayed by the tire management system referenced in Fig. 1.
FIGURE 6 is a screen shot of an exemplary account summary page displayed by the tire management system referenced in Fig. 1.
FIGURE 7 is a screen shot of an exemplary unit search page displayed by the tire management system referenced in Fig. 1.
FIGURE 8 is a screen shot of an exemplary add/edit unit page displayed by the tire management system referenced in Fig. 1.
FIGURE 9 is a screen shot of an exemplary survey details page displayed by the tire management system referenced in Fig. 1.
FIGURE 10 is a screen shot of an exemplary unit survey page displayed by the tire management system referenced in Fig. 1.
FIGURE 11 is a screen shot of another exemplary unit survey page displayed by the tire management system referenced in Fig. 1.
FIGURE 12 is a screen shot of an exemplary yard check survey page displayed by the tire management system referenced in Fig. 1.
FIGURE 13 is a screen shot of an exemplary scrap analysis survey page displayed by the tire management system referenced in Fig. 1.
FIGURES 14A-14B are screen shots of an exemplary account dashboard page displayed by the tire management system referenced in Fig. 1.
FIGURE 15 is a screen shot of an exemplary fleet account analysis page displayed by the tire management system referenced in Fig. 1.
FIGURE 16 is a screen shot of an exemplary fleet tire summary page displayed by the tire management system referenced in Fig. 1.
FIGURE 17 is a screen shot of an exemplary fleet unit summary page displayed by the tire management system referenced in Fig. 1.
FIGURE 18 is a screen shot of an exemplary fleet tire efficiency page displayed by the tire management system referenced in Fig. 1.
FIGURE 19 is a screen shot of an exemplary yard check tire summary page displayed by the tire management system referenced in Fig. 1.
FIGURE 20 is a screen shot of an exemplary yard check unit summary page displayed by the tire management system referenced in Fig. 1.
FIGURE 21 is a screen shot of an exemplary scrap analysis tire summary page displayed by the tire management system referenced in Fig. 1.
FIGURE 22 is a screen shot of an exemplary tire analysis page displayed by the tire management system referenced in Fig. 1.
FIGURE 23 is a flowchart illustrating an exemplary implementation of a competitive report routine capable of being executed by the tire management system referenced in Fig. 1.
FIGURE 24 is a flowchart illustrating an exemplary implementation of an event-driven report generating routine capable of being executed by the tire management system referenced in Fig. 1.

### Detailed Description

Embodiments consistent with the invention implement a comprehensive distributed, web-based tire management system that tracks both tire-related and vehicle-related information for multiple fleets and for multiple models and brands of tires. By tracking tire-related and vehicle-related data across multiple fleets and for multiple models and brands of tires, sophisticated analysis of tire-related issues can be performed on behalf of individual fleets, as well as for tire dealers and manufacturers. From the perspective of fleets, the comprehensive information tracked in a tire management system consistent with the invention enables fleets to make accurate and confident decisions regarding tires and maintenance programs. Furthermore, from the perspective of dealers and manufacturers, the comprehensive information may be used for increasing sales, defending pricing, increasing maintenance program revenue, identifying common problems and performing competitive analysis.

Other variations and modifications will be apparent to one of ordinary skill in the art. Therefore, the invention is not limited to the specific implementations discussed herein.

### Hardware and Software Environment

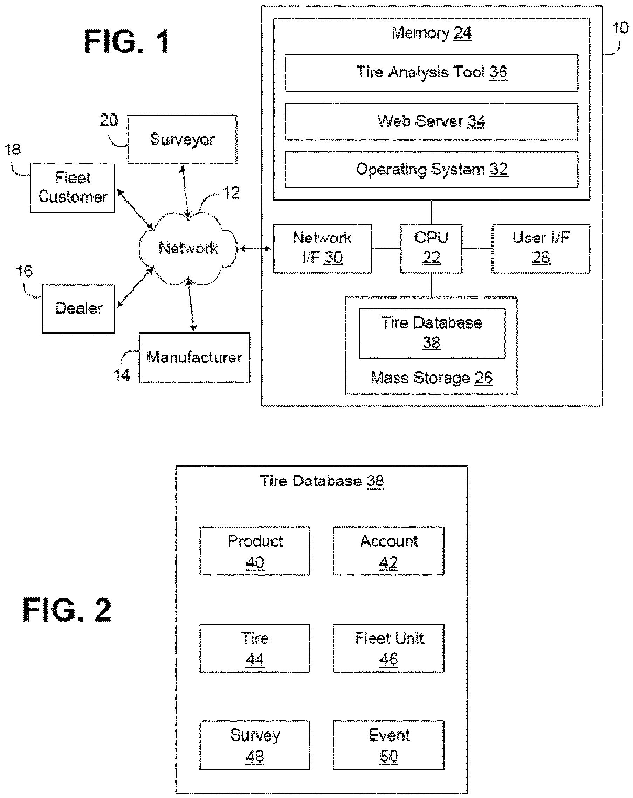

Turning now to the drawings, wherein like numbers denote like parts throughout the several views, Fig. 1 illustrates an apparatus 10 within which a time management system consistent with the invention may be implemented. Apparatus 10 in the illustrated embodiment is implemented as a server or multi-user computer that is coupled via a network 12 to one or more client computers or devices 14, 16, 18 and 20. For the purposes of the invention, each computer may represent practically any type of computer, computer system or other programmable electronic device. Moreover, each computer may be implemented using one or more networked computers, e.g., in a cluster or other distributed computing system. In the alternative, each computer may be implemented within a single computer or other programmable electronic device, e.g., a desktop computer, a laptop computer, a handheld computer, a cell phone, a set top box, etc., or in a high performance computer such as a massively parallel computer or supercomputer.

Computer 10 typically includes a central processing unit (CPU) 22 including at least one hardware-based microprocessor coupled to a memory 24, which may represent the random access memory (RAM) devices comprising the main storage of computer 10, as well as any supplemental levels of memory, e.g., cache memories, non-volatile or backup memories (e.g., programmable or flash memories), read-only memories, etc. In addition, memory 24 may be considered to include memory storage physically located elsewhere in computer 10, e.g., any cache memory in a processor in CPU 22, as well as any storage capacity used as a virtual memory, e.g., as stored on a mass storage device 26 or on another computer coupled to computer 10. Computer 10 also typically receives a number of inputs and outputs for communicating information externally. For interface with a user or operator, computer 10 typically includes a user interface 28 incorporating one or more user input devices (e.g., a keyboard, a mouse, a trackball, a joystick, a touchpad, and/or a microphone, among others) and a display (e.g., a CRT monitor, an LCD display panel, and/or a speaker, among others). Otherwise, user input may be received via another computer or terminal.

For additional storage, computer 10 may also include one or more mass storage devices 26, e.g., a floppy or other removable disk drive, a hard disk drive, a direct access storage device (DASD), an optical drive (e.g., a CD drive, a DVD drive, etc.), a storage area network, and/or a tape drive, among others. Furthermore, computer 10 may include an interface 30 with one or more networks 12 (e.g., a LAN, a WAN, a wireless network, a cellular network and/or the Internet, among others) to permit the communication of information with other computers and electronic devices. It should be appreciated that computer 10 typically includes suitable analog and/or digital interfaces between CPU 22 and each of components 24, 26, 28 and 30 as is well known in the art. Other hardware environments are contemplated within the context of the invention.

Computer 10 operates under the control of an operating system 32 and executes or otherwise relies upon various computer software applications, components, programs, objects, modules, data structures, etc., as will be described in greater detail below (e.g., web server 34 and tire analysis tool 36, which accesses a tire database 38). Moreover, various applications, components, programs, objects, modules, etc. may also execute on one or more processors in another computer coupled to computer 10 via network 12, e.g., in a distributed or client-server computing environment, whereby the processing required to implement the functions of a computer program may be allocated to multiple computers over a network.

In general, the routines executed to implement the embodiments of the invention, whether implemented as part of an operating system or a specific application, component, program, object, module or sequence of instructions, or even a subset thereof, will be referred to herein as "computer program code," or simply "program code." Program code typically comprises one or more instructions that are resident at various times in various memory and storage devices in a computer, and that, when read and executed by one or more processors in a computer, cause that computer to perform the steps necessary to execute steps or elements embodying the various aspects of the invention. Moreover, while the invention has and hereinafter will be described in the context of fully functioning computers and computer systems, those skilled in the art will appreciate that the various embodiments of the invention are capable of being distributed as a program product in a variety of forms, and that the invention applies equally regardless of the particular type of computer readable media used to actually carry out the distribution. Examples of computer readable media include tangible, recordable type media such as volatile and non-volatile memory devices (e.g., memory 18), floppy and other removable disks, hard disk drives, magnetic tape, and optical disks (e.g., CD-ROMs, DVDs, etc.), among others.

In addition, various program code described hereinafter may be identified based upon the application within which it is implemented in a specific embodiment of the invention. However, it should be appreciated that any particular program nomenclature that follows is used merely for convenience, and thus the invention should not be limited to use solely in any specific application identified and/or implied by such nomenclature. Furthermore, given the typically endless number of manners in which computer programs may be organized into routines, procedures, methods, modules, objects, and the like, as well as the various manners in which program functionality may be allocated among various software layers that are resident within a typical computer (e.g., operating systems, libraries, API'_{S}, applications, applets, etc.), it should be appreciated that the invention is not limited to the specific organization and allocation of program functionality described herein.

Those skilled in the art will recognize that the exemplary environment illustrated in Fig. 1 is not intended to limit the present invention. Indeed, those skilled in the art will recognize that other alternative hardware and/or software environments may be used without departing from the scope of the invention.

### Web-Based Tire Management System

Computer 10 implements a web-based tire management system that is accessible by a number of different parties, including tire manufacturer employees (via computers 14), tire dealer employees (via computers 16), fleet customer employees (via computers 18), and surveyors (via computers 20). Surveyors may be fleet customer employees, tire dealer employees, manufacturer employees, or third parties. Each of these parties may access the system via various types of computers, including desktop computers, laptop computers, mobile devices, tablet computers, etc.

The tire management system is web-based, and as such, computer 10 includes a web server 34 that operates to generate HTML web pages in response to HTTP requests generated by computers 14-20, in a manner generally known in the art. It will be appreciated that any known web-based technology, e.g., Web 2.0, Adobe Flash, Java, AJAX, etc. may also be supported by web server 34 to provide more sophisticated user interaction and control. Web server 34 may also be adapted to provide different user interfaces to different types of computers, e.g., to provide mobile-optimized web pages to mobile devices.

Tire analysis tool 36 provides the primary functionality of the tire management system, and interacts with a tire database 38 within which tire-related and other information used by the system is stored. As shown in Fig. 2, for example, tire database 38 may store product information 40, related to models and brands of tires. Account information 42 may store information about fleet customers, dealers, manufacturers and other users of the system. Tire information 44 may store information about individual tires, e.g., tire pressure and tread depth, whether installed on a vehicle, in an inventory, or designated for scrap. Fleet unit 46 stores information about individual units or vehicles in a fleet, including information such as the type of vehicle, the vocation of the vehicle (i.e., what the vehicle is used for), the powertrain of the vehicle, etc. Survey information 48 stores information about surveys, and event information 50 stores information about events that may have occurred, e.g., the implementation of a new maintenance procedure for a fleet. Additional information useful in analyzing tire performance may also be stored in database 38, as will be appreciated by one of ordinary skill in the art having the benefit of the instant disclosure.

Now turning to Fig. 2, this figure illustrates an exemplary home page 60 generated by computer 10, e.g., in response to an authorized user logging into the system. While an innumerable number of other user interfaces may be envisioned, home page 60 includes sets of hypertext links arranged into account 62, unit 64, survey 66, reports 68, documents 70 and system news 72 sections of the page.

Account section 62 enables a user to select, add, or edit an account (e.g., a fleet customer), and may additionally allow a user to view recently-accessed accounts. Unit section 64 enables a user to access fleet units (e.g., vehicles) for either engineering or yard check surveys, or add new units.

Survey section 66 enables a user to add or access three types of surveys: engineering (detailed fleet evaluation) surveys, yard check surveys and scrap analysis surveys, as well as print out paper forms for manually conducting such surveys for later electronic input.

Reports section 68 enables a user to access an account dashboard or overview, as well as access reports related to engineering/fleet evaluation, yard check and scrap analysis surveys. Tire summary reports are supported for all types of surveys. In addition, unit summary reports are supported for fleet evaluation and yard check surveys, with the former also supporting account reports and tire loss reports.

Documents section 70 supports the ability to print out paper survey forms for all three types of surveys, along with an additional form letter that may be used as a template for reporting survey results to a fleet customer.

System news section 72 may be used to provide links to items of interest to system users.

The tire management system is primarily driven by fleet surveys, which involve someone physically viewing tires and recording their observations either on a survey form or via a handheld or other electronic device. As noted above, three primary types of surveys are supported.

The first type of survey is an engineering or fleet evaluation survey, which requires detailed information to be entered about tires as well as the vehicles/units upon which they are installed. The goals of engineering surveys are to provide an ability to compare different models and brands of tires in terms of real world performance, determine what products perform the best in different applications and unit configurations, identify potential issues with tires to help reduce the number of road side breakdowns due to tire failures, and demonstrate the importance of a quality maintenance program and the impact one has on tire performance.

The second type of survey is a yard check survey, which is primarily focused on recording the conditions of a fleet's tires. Yard check surveys are primarily used to identify how well a fleet's maintenance program is performing and identify issues with tires that need to be addressed. Yard check surveys are typically quicker to perform due to a more limited amount of information being collected.

The third type of survey is a scrap analysis survey, which is primarily focused on recording information about removed tires that are found in a fleet's scrap pile. A surveyor may process tires in a scrap pile and record his or her observations about the product and its condition. Such survey results may be useful for analysis of reasons why tires were removed, whether certain products showed common issues, whether scrapped tires still had value, e.g., were capable of being retreaded or used for a longer time.

The surveys support various types of reporting and analysis, and the information is stored in a global repository to enable a wide variety of reports to be run. For example, various fleet-specific reports may be run, as may various product-specific reports, and different types of reports may be authorized for different types of users to restrict what type of information can be viewed by different users (e.g., to limit fleet customer users from viewing the information for other fleet customers). For example, data may be analyzed at a global level that contains information about every tire for every fleet. It could also be viewed at an account or fleet level to see just how certain tires are performing or even drill down to see how tires perform when they are on a specific unit or type of unit within a fleet.

From the perspective of a manufacturer, a tire management system may present fleet survey information from a global perspective, enabling a manufacturer to determine product trends, compare product performance, identify fleets to target for marketing purposes, increase tire sales by helping to target specific fleets through a greater understanding of the mix and performance of the products that a fleet uses, increase sales of maintenance programs by highlighting how competitor maintenance programs are performing or how the lack of a maintenance program is affecting a fleet, and retain tire or maintenance program sales by using the system to demonstrate the manufacturer's product and process performance.

From the perspective of fleets, a tire management system may be useful in identifying urgent tire issues, determining which tire products perform and provide the best value for them, thereby facilitating more intelligent purchasing and investment, identifying locations, units, and possibly drivers where tire performance is better or worse, evaluating a fleet's maintenance program and pinpointing adjustments that should be made to it, and comparing fleets to other like fleets (displayed anonymously) for benchmarking purposes.

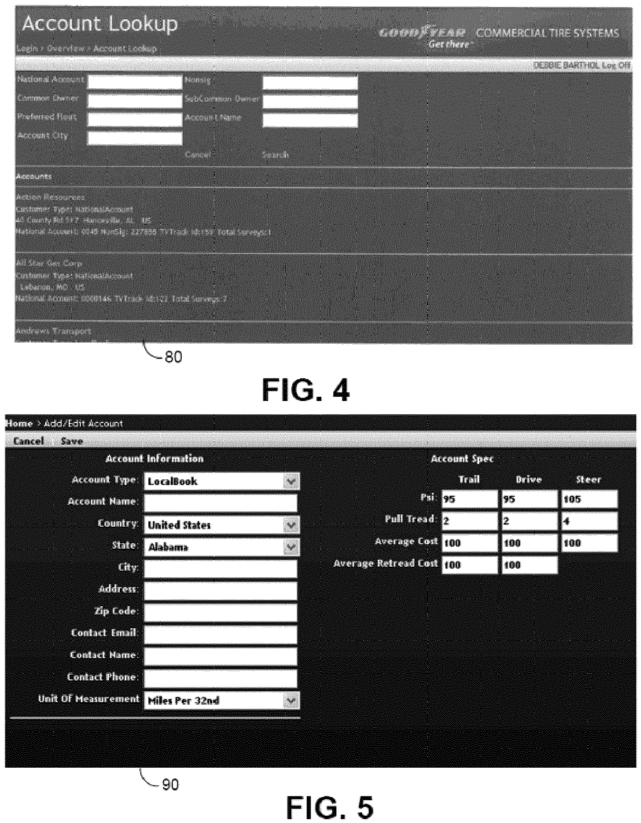

Now turning to Figs. 4-22, these figures illustrate a number of web pages that may be generated by computer 10 when interacting with an authorized user (after logging in with a user name and password, not shown) of the tire management system. Fig. 4, for example, illustrates an account lookup page 80 that may be accessed to look up a particular account. Search fields are provided for national account, common owner, preferred fleet, account city, nonsig, subcommon owner and account name, and results are provided below after clicking on a "search" link.

Fig. 5 illustrates an add/edit account page 90 that may be accessed to add a new account or edit an existing account. The information for an account may include an account type, account name, country, state, city, address, zip code, contact email, contact name, contact phone and unit of measurement (miles per 32^{nd} inch, kilometers per 32^{nd} inch, or kilometers per millimeter). In addition, a field may be provided to input any comments about the account.

Furthermore, as shown on the right side of Fig. 5, page 90 may provide the ability to enter an account specification that may be associated with an account. The specification provides desired tire characteristics for the account, often specified by the fleet customer. For example, desired tire pressures in psi may be specified for trail, drive and steer tires, as may minimum tread depth when tires should be removed from a unit (pull tread), shown in Fig. 5 in units of miles per 32^{na} inch of tread for each of trail, drive and steer tires. A specification may also include average tire costs for all three types of tires, along with average retread costs therefore. Typically, no retreads are used for steer tires, so such a field is omitted in page 90. The cost information may be used, for example, to calculate estimated operational costs and analyze the fiscal impact of changes to maintenance programs.

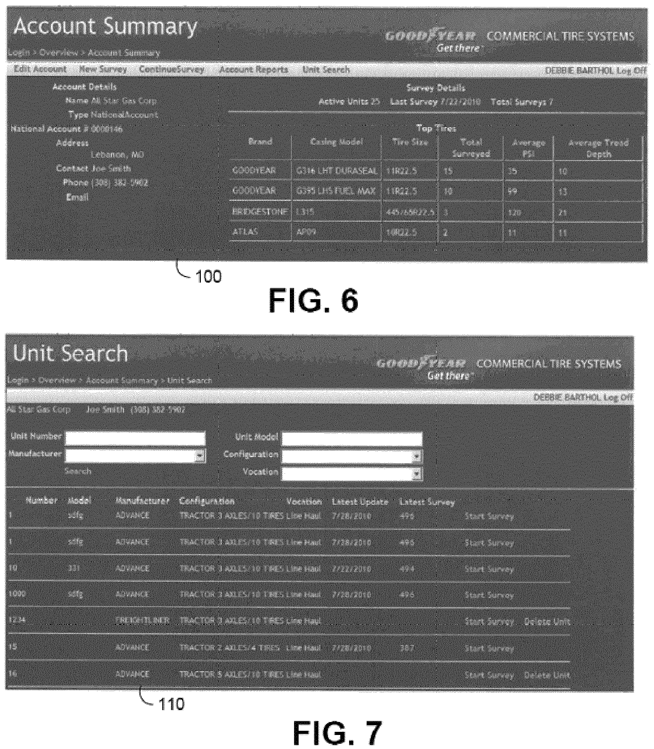

Fig. 6 illustrates an account summary page 100 that displays general information about a selected account. Options may be provided to edit the account, begin a new survey, continue a previous survey, link to the reporting system for this account, retrieve units and/or surveys for this account, and email the account contact. Overview information, such as number of units and completed surveys, and top tires used by the account and their associated parameters, may also be displayed.

Fig. 7 illustrates a unit search page 110 used to search for particular units for an account. Search fields are provided for vehicle parameters such as unit number, manufacturer (e.g., with a drop down list of compatible manufacturers), unit model, configuration (e.g., tractor, trailer or dolly, along with number of axles, wheels and/or wheels/axle) and vocation (e.g., line haul, city route, trash hauler, cement mixer, bulk hauler, pickup and delivery, beverage, school bus, auto carrier, grocery, fuel tanker, dump truck, oil field, construction or utility), with matching units displayed along with their respective numbers, models, manufacturers, configuration, vocation, as well as the latest update and survey. Unit specific links may also be provided, e.g., to start a survey, delete or edit a unit, or view or add comments.

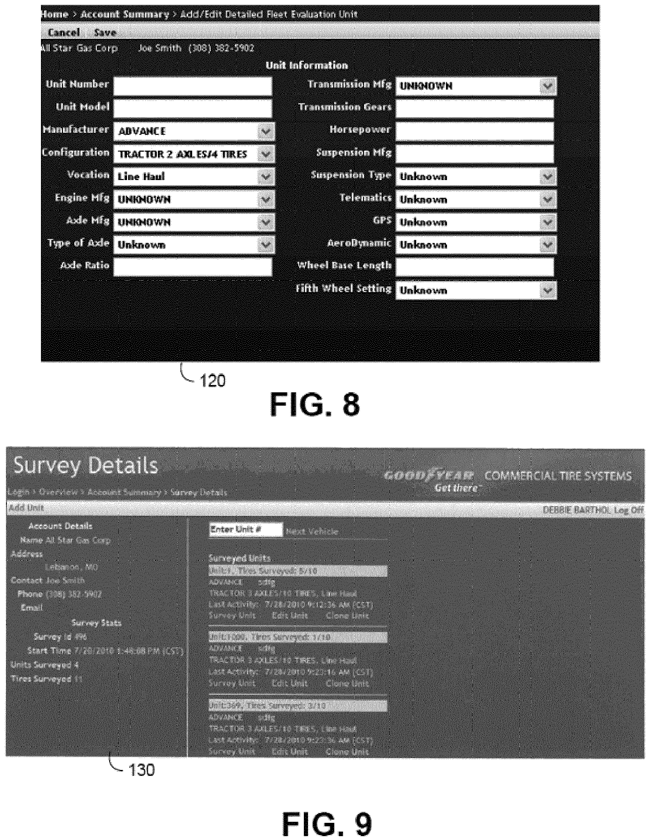

Fig. 8 illustrates an add/edit unit page 120 that may be accessed, for example, via the unit search results, which enables additional information about a unit to be displayed and/or edited. For example, in addition to the aforementioned fields for unit number, model, manufacturer, configuration and vocation, additional vehicle parameter fields may be provided for engine manufacturer, axle manufacturer, type of axle (e.g., single or tandem), axle ratio, transmission manufacturer, transmission gears, horsepower, suspension manufacturer, suspension type (e.g., airbag or spring), telematics (e.g., unknown, yes or no), gps (e.g., unknown, yes or no), aerodynamic (e.g., unknown, yes or no), wheel base length, and fifth wheel setting (e.g., unknown, center, forward, or back). It may also be desirable to permit comments to be entered and displayed for a unit.

Fig. 9 illustrates a survey details page 130, which provides basic account and survey information on the left side. The right side provides the ability to begin a survey for a new unit number and a list of units that a survey has already been started or completed on. Each unit listed has actions to start a survey, edit the unit and clone the unit (i.e., copy unit information to a new unit to reduce data entry).

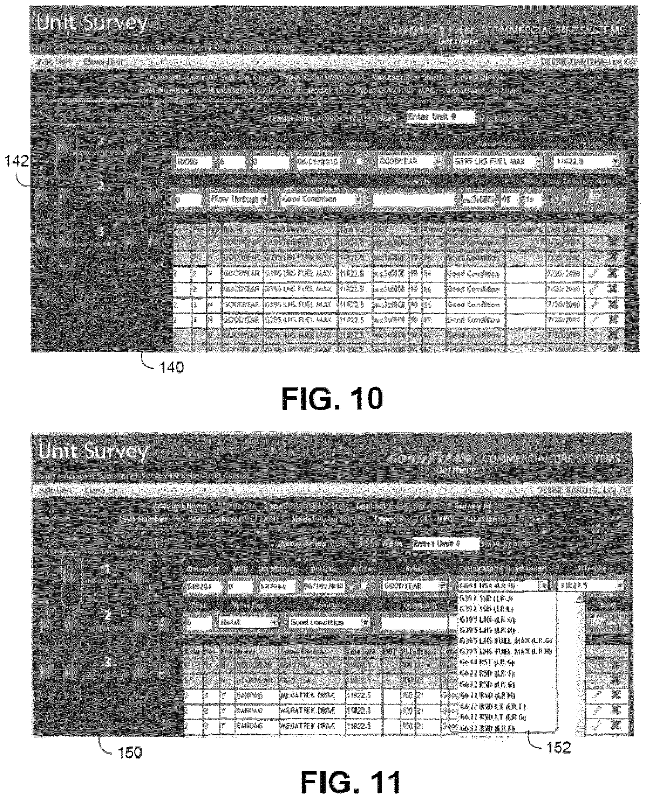

Fig. 10 illustrates a unit survey page 140, which is used to input survey information during or after conducting a unit survey. Page 140 displays at the top the ability to edit or clone a unit, along with account name, type, contact, survey identifier, unit number, unit manufacturer, unit model, unit type, unit MPG and unit vocation. In addition, a field is provided to enter another unit to survey. Also displayed is the actual miles and the %worn for the currently selected tire.

A set of icons 142 may be displayed with the wheel and axle configuration of the unit. The icons may be selectable to enable a surveyor to enter information for a particular tire, and the borders of the icons may be colored to indicate a selected tire, a surveyed tire and an unsurveyed tire. To the right of the icons, entry fields are provided to enter tire parameters such as odometer reading, mpg, on-mileage for the tire, the date the tire was installed, whether the tire is a retread, the brand, model and size of the tire, the cost, valve cap (e.g., metal, plastic, equalizer, flow through, missing, no access or none), condition (e.g., good, alignment, bead cracking, break skid, chamfer, cupping, depressed rib, diagonal wear, erosion/river, even wear, fast shoulder, flat spot, groove cracking, heel toe, high low, lug tear, puncture, rib tear, shoulder separation, sidewall separation, stone drilling, tread separation, wipe out, and worn out), comments, DOT, tire pressure, tread depth, diameter, tread depth when new (not editable).

A table is also displayed of all tires on the unit. For each tire on the unit, the axle, position, whether it is a retread, brand, tread design, size, DOT, tire pressure, tread depth, diameter, condition, comments and last update timestamp are listed. A surveyor can select a tire to survey by either selecting the icon or the associated row in the table, and the information above the table is updated to reflect the newly selected tire. A link may also be provided to view tires that have been removed from the unit.

It should also be noted that a link is provided to save the survey, and for each tire, a wrench icon is provided to remove the tire from the unit, and an "x" icon is provided to delete the tire from the unit. Clicking the removal link may open a dialog box to receive input as to the odometer reading when the tire was removed, the condition of the tire, the reason for removal (e.g., cut, driver complaint, exposed belt, flat tire, impact break, irregular wear, mismatched duals, nail holes, puncture, ride disturbance, road hazard, shoulder break, shoulder separation, tread separation, worn out), the tread depth and any comments.

Fig. 11 shows an alternate unit survey page 150 where the "tread design" field from page 140 of Fig. 10 is replaced with a casing model field 152 which, in addition to including the model of a casing, also includes a load range.

A tire management system consistent with the invention may also include a separate interface to enable a manufacturer user or administrator to edit and/or add new products to the system. Thus, whenever a manufacturer or competitor introduces a new product, the information about the product may be entered into the system to maintain the system as up to date as possible. A similar interface may also be provided to update unit manufacturers and models. One of skill in the art having the benefit of the instant disclosure will readily appreciate how such interfaces may be implemented in a tire management system consistent with the invention.

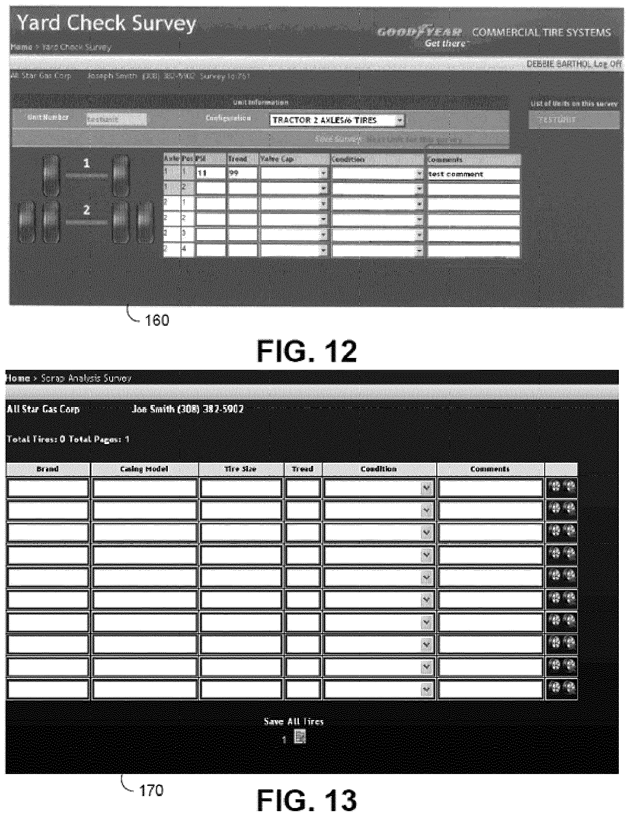

Fig. 12 shows a yard check survey page 160 which is used to perform a yard check survey. As can be seen in the figure, less information is typically collected in such a survey. For the unit itself, a unit number and configuration is collected. An set of icons representing the selected configuration is displayed along with a table with rows for each tires. For each tire, a field is provided in the table for axle, position on axle, tire pressure (psi), tread depth, valve cap, condition and comments. In some embodiments, it may also be desirable to also include tire brand, casing model and/or diameter fields.

Fig. 13 shows a scrap analysis survey page 170 which is used to perform a scrap analysis survey. For each scrap tire, a user may be required to enter tire brand, tire casing model, tire size, tread depth, condition and comments. In addition, links may be provided to add new tires or delete individual tires (shown at the end of each row in the table).

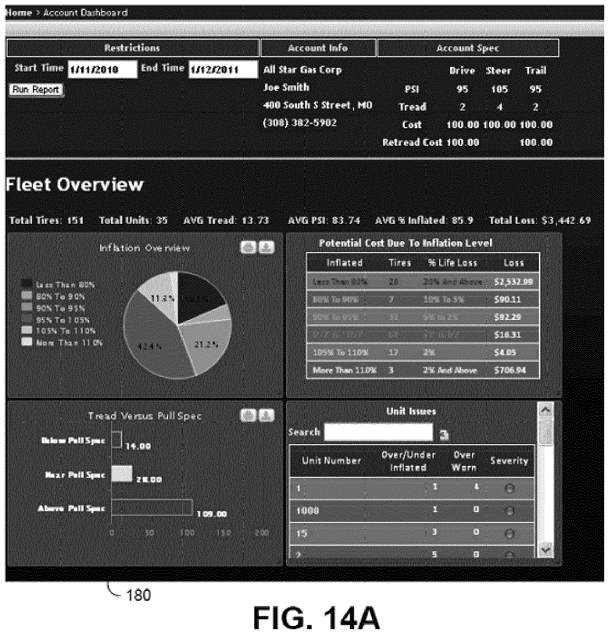

Figs. 14A-14B show an account dashboard page 180 that is used to provide an overall view of an account/fleet. A user may be permitted to restrict analysis to a range of dates, and basic account information is displayed at the top of the page. A fleet overview section displays total tires, total units, average tread depth, average tire pressure, average % inflated (by comparing tire pressures to the account specification) and a calculation of total loss (in dollars) based upon the tire pressures deviating from the account specification.

A pie or other type of chart may be displayed to break down the percentage of tires at different levels of inflation, and a bar or other chart may be displayed to break down tread depth verses pull specification (i.e., when tires should be removed from the units), showing the percentage that are below, near or above the pull specification. A table may also be displayed to indicate the potential costs due to inflation level, based upon the projected loss of tire life based on tire pressure and the average cost set in the account specification.

In addition, a table may be displayed to list issues for different units requiring attention, e.g., with the unit number, number of tires that are over/under inflated, number of tires that are over worn, and an icon (red, yellow or green) indicating the severity of the issue. Selection of a unit number pulls up another page with additional information about the issues, e.g., information about the unit, the tires thereon, and the tire parameters associated with those tires, so that tires not meeting required specifications are highlighted to the user. For example, it may be desirable to display a table with, for each tire, a position, axle, brand, casing model, tire size, tire pressure % inflated, potential loss in dollars, tread depth and diameter.

In addition, it may be desirable to provide links in each section to either print or download the data reflected in the various charts and tables in the dashboard.

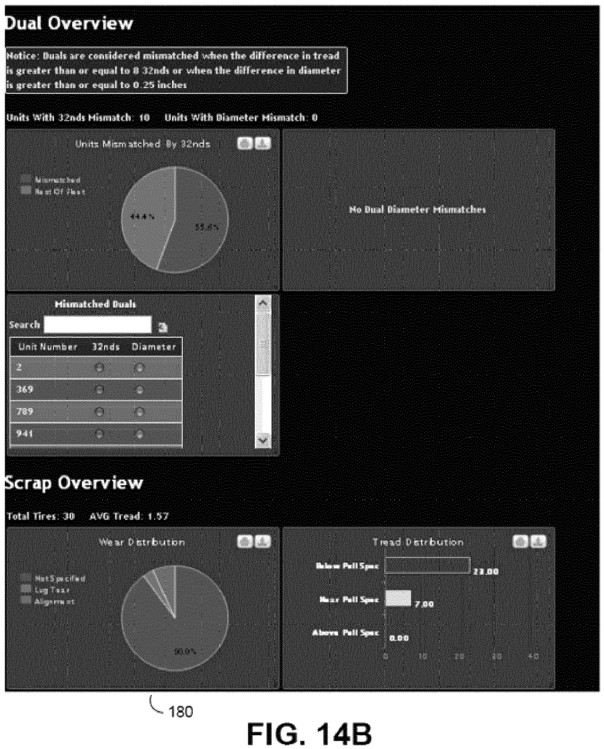

As shown in Fig. 14B, another section that may be displayed in a dashboard is a dual overview, which identifies dual wheel configurations where the paired tires have a difference in tread greater than or equal to 8 32^{nds} or where a difference in diameter is greater than or equal to 0.25 inches. The section may display the number of units with depth and diameter mismatches, along with a chart showing the percentage of units having mismatched duals. A table, listing the units and an icon listing the severity of mismatches for both thread depth and diameter mismatches, may also be displayed. Clicking on a unit number may display a dialog box showing the tires in icon form and with those tires experiencing mismatches highlighted.

Another section that may be displayed in a dashboard is a scrap overview, which lists the total number of scrapped tires and the average tread depth of the scrapped tires. Also displayed is a chart showing the wear distribution taken from the condition of the tire as specified in the scrap analysis survey. Another chart displays the tread distribution of scrapped tires compared to the account specification, indicating whether tires are more likely to be pulled at greater or lesser tread depths than defined in the specification.

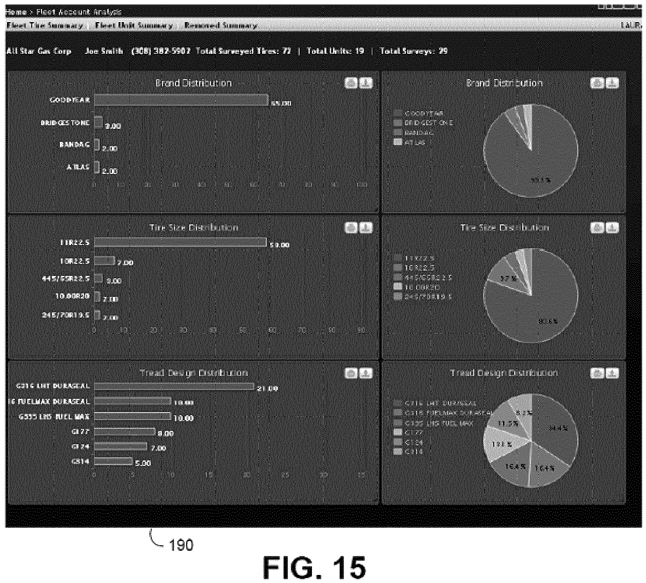

Fig. 15 illustrates a fleet account analysis page 190 that displays charts associated with a fleet account, such as distribution of brands, tire sizes and tread designs. Account information, including number of surveyed tires, total units and total surveys is listed, as are links to fleet tire summary, fleet unit summary and removed summary reports.

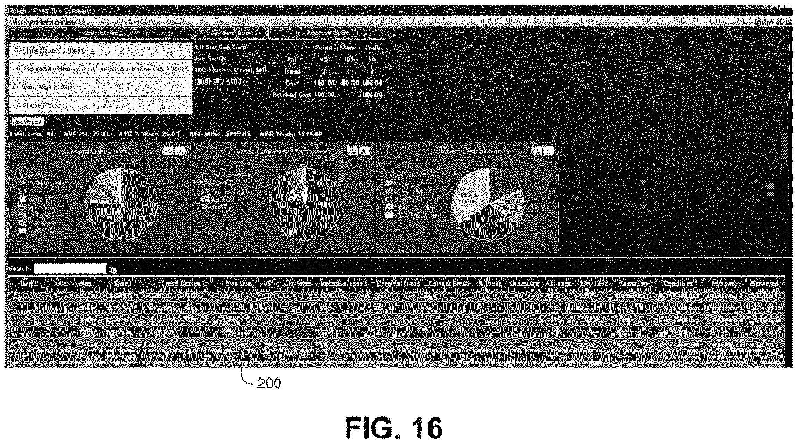

A fleet tire summary report is illustrated by page 200 of Fig. 16. A user is permitted to enter various filters such as tire brand filter (tire brand, tread design, tire size), retread, removal reason, condition, valve caps, minimum and/or maximum filters (for tire pressure, miles ran, and tread depth), and starting and ending times. Buttons may be provided to run the report with the filters and clear the filters, and the resulting report includes the total number of tires, the average tire pressure, the average miles and the average tread depth, along with charts showing brand distribution, wear condition distribution and inflation distribution. In addition, it may be desirable to display a table showing the tires that meet the filter criteria, displaying for each tire a unit number, axle, position, brand, tread design, tire size, tire pressure, % inflated, potential loss, original and current tread depth, % worn, diameter, mileage, mileage per 32^{nd}, valve cap, condition, removal reason and survey date, with a field provided to search through the table. It will be appreciated that in other embodiments, practically any combination of tire and/or vehicle parameters may be used for filtering in a report.

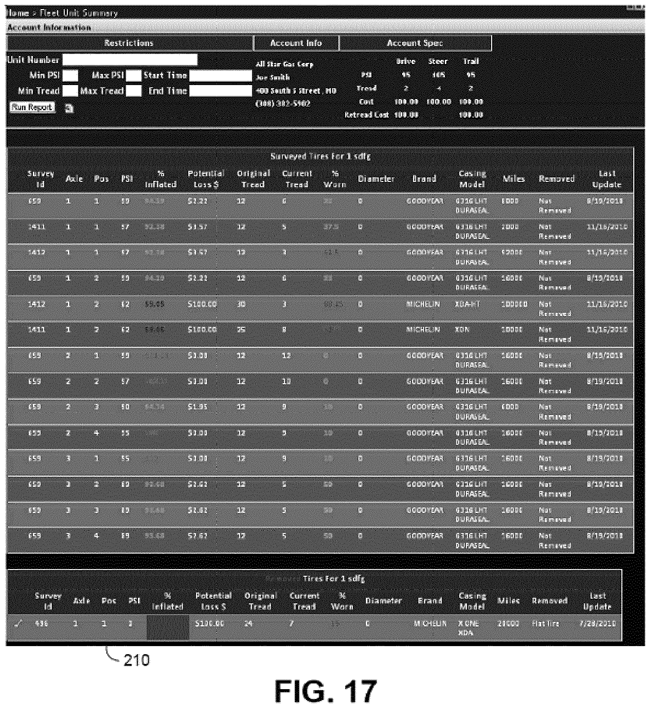

Fig. 17 illustrates a fleet unit summary page 210. Filters may be applied for unit number minimum and/or maximum tire pressure, minimum and/or maximum tread depth and start and end times, and the resulting report may include tables for surveyed and removed tires for each matching unit. Page 210, for example, illustrates the surveyed and removed tables for one matching unit, with each row of the table including a survey identifier, axle, position,% inflated, potential loss, original and current tread depth, % worn, diameter, brand, casing model, miles, removal reason and last update field.

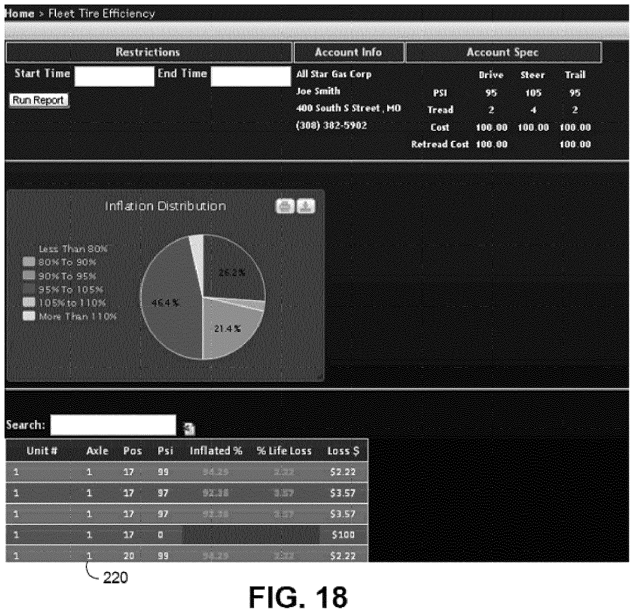

Fig. 18 illustrates a fleet tire efficiency report page 220, which can be run over a limited time period of desired. Displayed in this report is a chart of inflation distribution, along with a listing of tires along with unit number, axle, position, tire pressure, % inflated, % life loss and total loss in dollars, with the ability provided to search through the table.

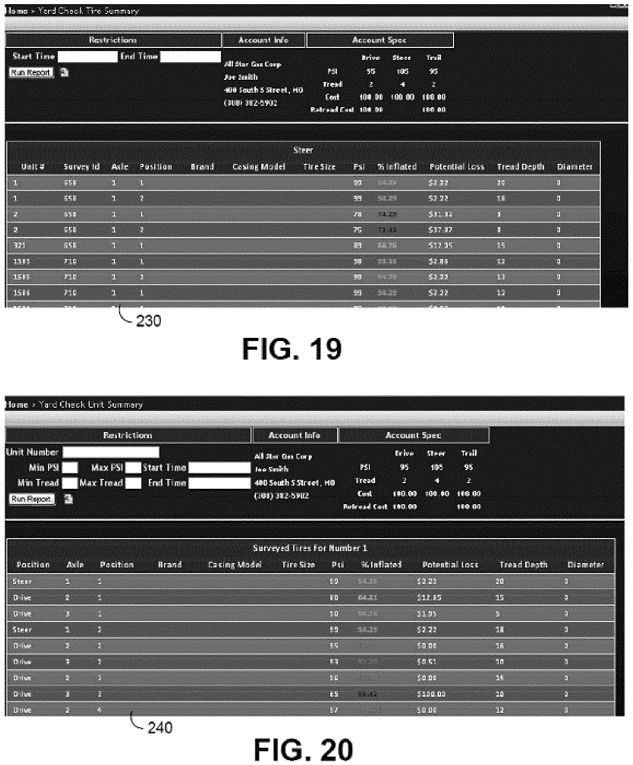

Figs. 19 and 20 respectively illustrate yard check tire and unit summary pages 230, 240. Page 230 allows for a report to be restricted for time, and includes a listing of tires, identifying for each a unit number, survey identifier, axle, position, brand, casing model, tire size, tire pressure, % inflated, potential loss, tread depth and diameter. Separate tables are generated for steer, drive and trail tires (only the steer table is shown in Fig. 19). Similarly, page 240 allows for a report to be filtered for time, as well as by unit number, minimum and/or maximum tire pressure and minimum and/or maximum tread depth. The report includes a table for each matching unit, with each table including a list of surveyed tires, and for each such tire, position, axle, type brand, casing model, tire size, tire pressure, % inflated, potential loss, tread depth and diameter.

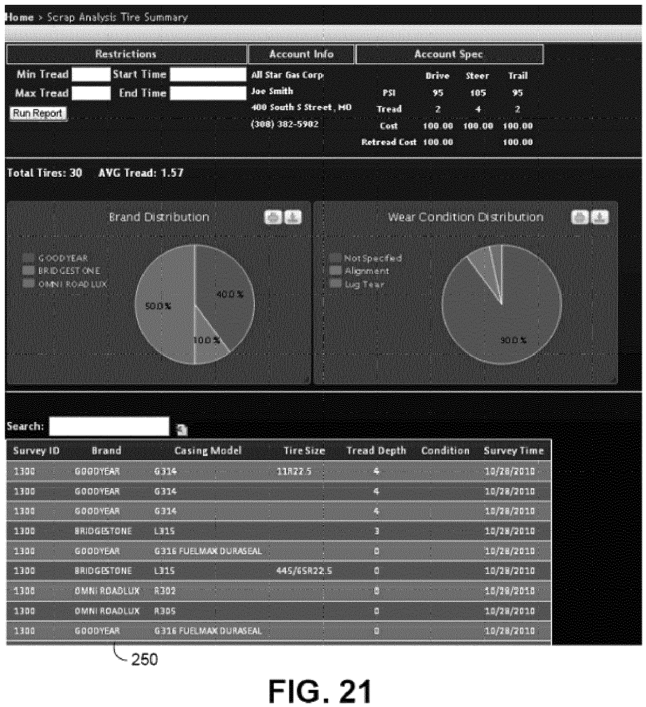

Fig. 21 illustrates a scrap analysis tire summary page 250, which allows a report to be filtered by minimum and maximum tread depth, as well as time. A total number of tires and average tread depth are displayed, as are charts showing brand distribution and wear condition distribution. A table is also displayed with columns for survey identifier, brand, casing model, tire size, tread depth, condition and survey time. The table is also searchable.

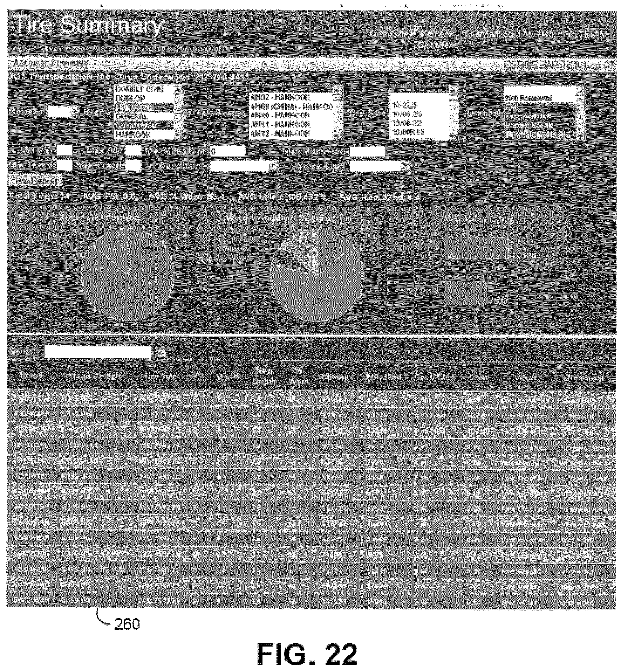

Fig. 22 illustrates an alternate tire summary page 260 to that illustrated in Fig. 16. As shown in this figure, it may be desirable in some embodiments to allow multiple items to be selected for various filters (e.g., multiple brands, multiple tread designs, multiple tire sizes, multiple conditions, multiple removal reasons, etc.), and multiple filters may be applied to provide highly customizable report generation. In addition, comprehensive analysis may be performed to compare different types of tires, different manufacturers, tire performance for different vocations or unit configurations, etc. In addition, it may be desirable to allow such analysis to be performed across tires from multiple fleets. Doing so would enable, for example, a manufacturer to compare different brands or models of tires in different scenarios (e.g., different unit configurations, different vocations, etc.) and identify optimum tires for different situations. As also illustrated in Fig. 22, it may also be desirable to include cost and cost/32^{nd} fields in a result table.

It may also be desirable in some embodiments to color certain data points differently to highlight areas of concern (e.g., display very low tire pressures or very small tread depths in red). Furthermore, it may be desirable to make the headings of tables selectable so that the tables can be resorted based upon particular headings.

Additional reports may be run based upon the collected data. For example, as noted above, significant vehicle/unit-related information may be collected, including, for example, unit number, model, manufacturer, configuration and vocation, engine manufacturer, axle manufacturer, type of axle, axle ratio, transmission manufacturer, transmission gears, horsepower, suspension manufacturer, suspension type, telematics, gps, aerodynamic, wheel base length, and fifth wheel setting, and as such, it may be desirable to use this information to further filter reports and identify potential differences between different models and/or brands of tires for different operating scenarios.

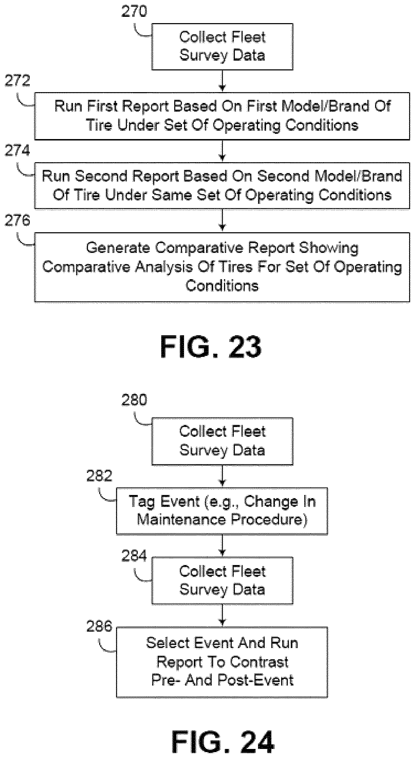

Fig. 23, for example, illustrates a competitive report routine that may be performed to compare two different brands and/or models of tires under similar operating conditions. After collecting survey data from one or more fleets (block 270), a first report is run on a first model and/or brand of tire under a given set of operating conditions (e.g., long haul vocations where most driving is on highways, or waste hauling vocations where most driving is stop and go on city streets) in block 272. A second report is run on a second model and/or brand of tire under the same conditions (block 274), and then a comparative report is generated showing the comparative analysis of the different tires under the same operating conditions, e.g., through comparative charts and/or tables showing different tire pressures, costs, removal reasons, conditions, tread depths, costs/mile, miles per 32^{nd}, % tires underinflated, etc.

Fig. 24 illustrates another event-driven reporting routine also capable of being performed to compare fleet results before and after certain events. For example, it may be desirable to provide comparative results before and after a change in maintenance procedures for a fleet. As shown in block 280, fleet survey data may be collected, then at some future time, an event such as a change in maintenance procedures, may occur and be tagged in the system (block 282). After tagging the event, further fleet survey data is collected (block 284) and then a user may select the event and run a report to compare performance before and after the event, e.g., through comparative charts and/or tables showing different tire pressures, costs, removal reasons, conditions, tread depths, costs per 32^{nd}, etc.

Another report or display presented to a user may include a health "index" created for a fleet or a model of tire that presents a single, composite indicator of the relative or absolute health of a fleet or a model of tire. For example, in one embodiment, a health index may be a numerical value scaled on a 100 point scale. In another embodiment, the health index may be implemented as a "grade" such as A-F. A health index may be an absolute value, or may be relative to other fleets or tires, or may be relative, for example, to an account specification to reflect how a fleet is performing based upon its own established goals. It will be appreciated that a wide variety factors may contribute to a health index, and that a wide variety of weights may be applied to those factors to scale the relative importance of the factors to the overall health of a fleet or tire.

A multitude of additional reports may be envisioned, including for example, reports that rank and/or find particular tires having lowest costs, wear and/or problems in different applications (e.g., different vocations, different engines, different transmissions, different axle configurations, steering vs. drive vs. trail wheels, etc.), and reports that compare a fleet's performance against the performance of other fleets or the average of all fleets in an industry. One of ordinary skill in the art having the benefit of the instant disclosure will appreciate that an innumerable number of different types of reports can be generated off the information collected in the herein-described system, and thus, the invention is not limited to the particular reports disclosed herein.

## Claims

1. A method of tracking tire-related data for a plurality of fleets of vehicles, the method comprising:
receiving via a web-based interface survey data collected from a plurality of vehicles associated with a plurality of fleets, the survey data including, for each of the plurality of vehicles, a plurality of tire parameters and a plurality of vehicle parameters;
storing the survey data in a database; and
in response to a request received through the web-based interface, generating at least one report using the survey data stored in the database, wherein the report is based upon survey data collected from vehicles associated with more than one fleet.

2. The method of claim 1, wherein the report compares a fleet with another fleet.

3. The method of claim 1 or 2, wherein the report compares a model of tire against another model of tire.

4. The method of at least one of the previous claims, wherein the report includes a health index representing a composite score for a fleet or model of tire.

5. The method of at least one of the previous claims, further comprising receiving an event, wherein the report compares performance of a fleet before the event with performance of the fleet after the event.

6. The method of at least one of the previous claims, further comprising receiving via the web-based interface at least one filter defining a set of operating conditions, wherein the report is filtered using the filter.

7. The method of at least one of the previous claims, wherein the tire parameters include at least one of tire pressure, tread depth, position, axle, type, condition, diameter, brand, casing model, load, tire size, odometer, miles per gallon, liter per 100 kilometer, on-mileage, on-date, retread, tread design, cost, valve cap, DOT, new tread depth, and removal reason.

8. The method of at least one of the previous claims, wherein the vehicle parameters include at least one of vocation, model, manufacturer, configuration, engine manufacturer, axle manufacturer, type of axle, axle ratio, transmission manufacturer, transmission gears, horsepower, suspension manufacturer, suspension type, telematics, GPS, aerodynamic, wheel base length and fifth wheel setting.

9. The method of at least one of the previous claims, further comprising receiving via the web-based interface a fleet specification defined for a fleet, the fleet specification including at least one parameter selected from the group of pull tread depth, tire pressure, average cost and average retread cost, wherein the specification defines separate parameters for trail, drive and steer tires, and wherein the report compares fleet performance against the fleet specification.

10. The method of at least one of the previous claims, wherein receiving the survey data includes receiving survey data from at least one of a fleet evaluation survey, a yard check survey and a scrap tire analysis survey.

11. The method of at least one of the previous claims, wherein the report includes a fleet overview report.

12. The method of claim 11, wherein the overview report displays costs loss due to inflation level, percentages of tires at different inflation levels, percentages of tires compared to a pull tread depth, an overview of mismatched tires in dual configurations, and a scrap overview.

13. A computer program product comprising a computer readable medium and program code stored on the computer readable medium for executing the method in accordance with at least one of the previous claims.

14. The computer program product of claim 13 configured upon execution to track tire-related data for a plurality of fleets of vehicles.
